# EUROPÄISCHE PATENTANMELDUNG

(11) **EP 3 205 199 A1**
(43) Veröffentlichungstag der Anmeldung: **16.08.2017**
(21) Anmeldenummer: 17401012.4
(22) Anmeldetag: 09.02.2017
(51) Int. Cl.: A01C 15/00, G01G 19/08, G01G 19/12, A01C 17/00

(54) **GEZOGENE VERTEILMASCHINE**

(30) Priorität: 11.02.2016 DE 102016102378
(71) Anmelder: Amazonen-Werke H. Dreyer GmbH & Co. KG, 49205 Hasbergen (DE)
(72) Erfinder: Kleine-Hartlage, Hubertus, 49186 Bad Iburg (DE); Dieckmann, Michael, 48161 Münster (DE)

(57) **Zusammenfassung**

Gezogene Verteilmaschine, vorzugsweise als einachsiger Anhänger ausgebildet, mit einer Laufräder (6) aufweisenden Tragachse (5) und einer Zugdeichsel (7), einem mit der Tragachse (5) verbundenen Fahrwerksrahmen (4) und einem auf dem Fahrwerksrahmen (4) aufgesetzten langgestreckten Vorratsbehälter (3) zur Aufnahme von zu verteilendem Material und zugeordneter Verteileinrichtung (2) zur Verteilung des sich im Vorratsbehälter (3) befindlichen zu verteilenden Materiales, wobei dem Fahrwerksrahmen (4) zumindest drei Wiegezellenelemente (10) zur Ermittlung der Masse des sich im Vorratsbehälter (3) befindlichen zu verteilenden Materiales und/oder des aus dem Vorratsbehälter (3) entnommenen zu verteilenden Materiales zugeordnet sind. Um eine verbesserte Anordnung für die Wiegezellenelemente (10) zu schaffen, damit auch unter schwierigen Bedingungen, wenn beispielsweise Federelemente zwischen dem Fahrwerksrahmen (4) und der Tragachse angeordnet sind, ausreichend genaue Messergebnisse erhalten werden, ist vorgesehen, dass dem Vorratsbehälter ein den Vorratsbehälter tragender und auf dem Fahrwerksrahmen (4) aufgesetzter Tragrahmen (8) zugeordnet ist, und dass die Wiegezellenelemente (10) zwischen dem Fahrwerksrahmen (4) und dem Tragrahmen (8) angeordnet sind.

## Beschreibung

Die Erfindung betrifft eine gezogene Verteilmaschine gemäß des Oberbegriffes des Patentanspruches 1.

Eine derartige gezogene Verteilmaschine ist in dem DE 201 08 302 U1 beschrieben. Die hier beschriebene gezogene Verteilmaschine ist als einachsiger Anhänger ausgebildet. Hierzu weist die Maschine eine mit zwei Laufrädern bestückte Tragachse und eine Zugdeichsel auf. Mit der Tragachse und der Zugdeichsel ist ein Fahrwerksrahmen verbunden. Auf dem Fahrwerksrahmen ist ein langgestreckter Vorratsbehälter zur Aufnahme von zu verteilenden Material und zugeordneter Verteileinrichtung zur Verteilung des sich im Vorratsbehälter befindlichen zu verteilenden Materiales aufgesetzt. Dem Fahrwerksrahmen sind drei Wiegezellenelemente zur Ermittlung der Masse des sich im Vorratsbehälter befindlichen zu verteilenden Materiales und/oder des aus dem Vorratsbehälter entnommenen zu verteilenden Materiales zugeordnet. Zwei Wiegezellenelemente sind zwischen dem Fahrwerksrahmen und der Tragachse und ein Wiegezellenelement ist zwischen dem Fahrwerksrahmen und der Zugdeichsel angeordnet.

Insbesondere wenn Federelemente in dem Bereich zwischen dem Fahrwerksrahmen und der Tragachse, in welchem auch die Wiegezellenelemente angeordnet sind, angeordnet sind, kommt es zu fehlerhaften Messergebnissen.

Der Erfindung liegt die Aufgabe zu Grunde, eine verbesserte Anordnung für die Wiegezellenelemente zu schaffen, damit auch unter schwierigen Bedingungen, wenn beispielsweise Federelemente zwischen dem Fahrwerksrahmen und der Tragachse angeordnet sind, ausreichend genaue Messergebnisse erhalten werden.

Diese Aufgabe der erfindungsgemäß dadurch gelöst, dass dem Vorratsbehälter ein den Vorratsbehälter tragender und auf dem Fahrwerksrahmen aufgesetzter Tragrahmen zugeordnet ist, und dass die Wiegezellenelemente zwischen dem Fahrwerksrahmen und dem Tragrahmen angeordnet sind.

Infolge dieser Maßnahmen wird zwischen dem Fahrwerksrahmen und dem Vorratsbehälter ein zusätzlicher Rahmen, nämlich einen Tragrahmen des Vorratsbehälters angeordnet. Gemeinsam mit dieser Maßnahme werden dann in die Wiegezellenelemente zwischen dem Fahrwerksrahmen und Tragrahmen angeordnet, somit also von der Anordnung zwischen dem Fahrwerksrahmen einerseits und der Tragachse und der Zugdeichsel andererseits entkoppelt. Somit sind die Wiegezellenelemente von der Tragachse und der Zugdeichsel auf die Maschine einwirkenden Kräfte abgekoppelt. Es werden wesentlich verbesserte Messwerte von den erfindungsgemäß angeordneten Wiegezellenelementen ermittelt. Durch diese Verlegung der Wiegezellenelemente des Wiegesystems aus dem direkten Tragachsenbereich und dem Zugdeichselbereich wird ein "Kraftkurzschluss" zwischen Wiegezellenelement des Wiegesystems vermieden. Durch die neue Anordnung werden die eigentlichen aufzunehmenden Wiegekräfte unverfälscht in die Wiegezellenelemente eingeleitet. Auch entfallen so von Beschleunigungs- oder Bremsvorgänge herrührende Kräfte, die auf die Wiegezellenelemente in verfälschender Weise einwirken können. Somit ist der den Vorratsbehälter tragende Rahmen mit dem Vorratsbehälter und die Wiegezellenelementen von der Tragachse in vorteilhafter Weise entkoppelt.

Eine einfache Verbindung des Fahrwerksrahmens mit dem Tragrahmen wird dadurch erreicht, dass der Fahrwerksrahmen und der Tragrahmen beabstandet zueinander angeordnet und mittels der Wiegezellenelemente miteinander verbunden sind.

In einer Ausführungsform ist vorgesehen, dass im hinteren Bereich des Fahrwerksrahmen und des Tragrahmens in seitlicher Richtung beabstandet zueinander zwei Wiegezellenelemente und im vorderen Bereich des Fahrwerksrahmen und des Tragrahmens zumindest ein weiteres Wiegezellenelement angeordnet ist.

In einer weiteren Ausführungsform ist vorgesehen, dass im vorderen Bereich des Fahrwerksrahmens und des Tragrahmens nur ein weiteres Wiegezellenelement zumindest annähernd mittig und oberhalb oder in Verlängerung der Mittellängsachse der Zugdeichsel angeordnet ist.

Wenn im vorderen Bereich zwei Wiegezellenelemente angeordnet sind, ist vorgesehen, dass im vorderen Bereich des Fahrwerksrahmens und des Tragrahmens in seitlicher Richtung beabstandet zueinander zwei Wiegezellenelemente angeordnet sind.

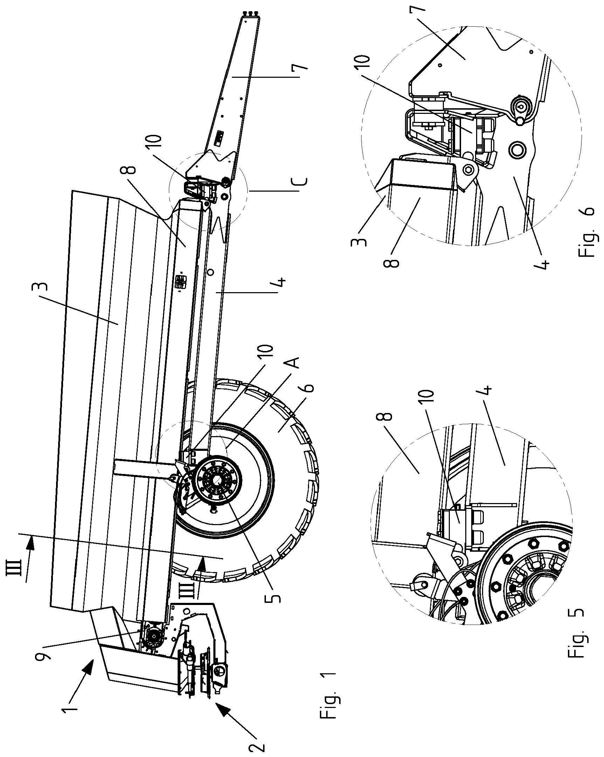

Weitere Einzelheiten der Erfindung sind der Beispielsbeschreibung und den Zeichnungen zu entnehmen. Die Zeichnungen zeigen
- Fig.1: die als Großflächendüngerstreuer mit einem Zentrifugalstreuwerk ausgebildete gezogene Verteilmaschine in Seitenansicht und Prinzipdarstellung, wobei das in Fahrtrichtung rechte Rad abgenommen dargestellt ist,

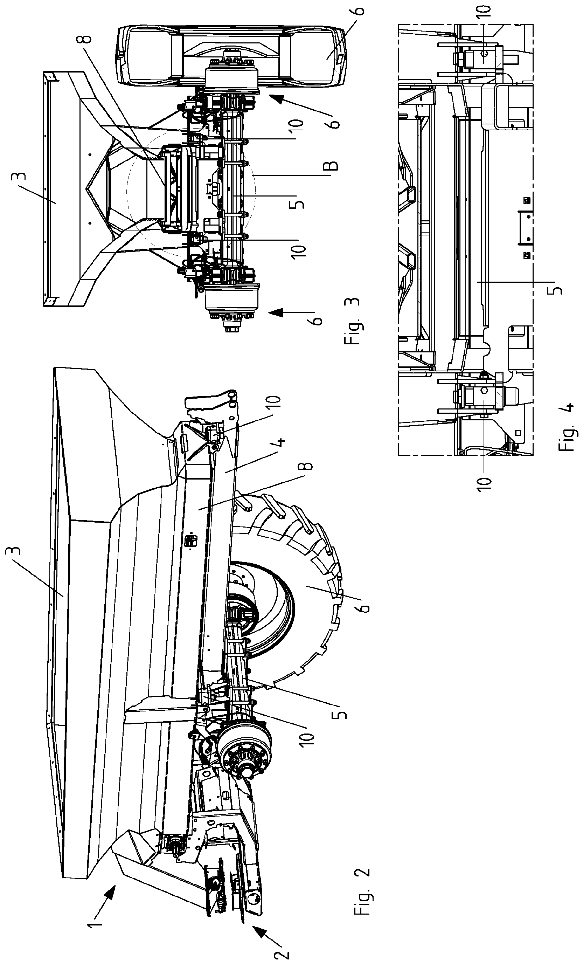

- Fig.2: die Verteilmaschine in perspektivischer Ansicht von schräg vorne und in Prinzipdarstellung, wobei das in Fahrtrichtung rechte Rad sowie die Zugdeichsel abgenommen dargestellt ist,
- Fig.3: die Verteilmaschine in der Ansicht III - III,
- Fig.4: die Einzelheit B nach Fig.3 im vergrößerten Maßstab,
- Fig.5: die Einzelheit A nach Fig.1 im vergrößerten Maßstab und
- Fig.6: die Einzelheit C nach Fig.1 im vergrößerten Maßstab.

Die gezogene Verteilmaschine ist als Großflächendüngerstreuer 1 mit einem Zentrifugalstreuwerk 2 ausgebildet und weist den trichterförmigen Vorratsbehälter 3 auf. Der Großflächendüngerstreuer 1 weist den Fahrwerksrahmen 4 mit Tragachse 5 und den beiden an der Nabe der Tragachse 5 befestigten Laufräder 6 und die an der Vorderseite des Fahrwerksrahmen 4 befestigte Zugdeichsel 7 auf. Auf dem Fahrwerksrahmen 4 ist der Tragrahmen 8 aufgesetzt. Der Tragrahmen 8 trägt den Vorratsbehälter 3.

Der Vorratsbehälter 3 ist von hinten gesehen trichterförmig ausgebildet und der untere Bereich des Vorratsbehälters 3 wird von einem nach hinten fördernden Förderband 9 abgeschlossen. Dieses Förderband 9 fördert das sich im Vorratsbehälter 3 befindliche Material zu einem sich auf der Rückseite des Vorratsbehälters 3 und unterhalb des Förderbandes 9 angeordneten Zentrifugalstreuwerk 2. Dieses Zentrifugalstreuwerk 2 verteilt das ihm von dem Förderband 9 in dosierter Weise zugeführte Material auf der Bodenoberfläche.

Zwischen dem Fahrwerksrahmen 4 und dem Tragrahmen 8 sind im hinteren Bereich 2 in seitlicher Richtung beabstandet zueinander angeordnete Wiegezellenelemente 10 und dem vorderen Bereich ist ein Wiegezellenelement 10 mittig im Bereich der Zugdeichsel 7 im Wesentlichen in Verlängerung der Mitte Längsachse der Zugdeichsel angeordnet. Somit sind der Fahrwerksrahmen 4 und der Tragrahmen 8 durch die Wiegezellenelemente 10 miteinander verbunden.

In einer alternativen Variante können in nicht dargestellter Weise auch im vorderen Bereich des Fahrwerksrahmens 4 und des Tragrahmens 8 in seitlicher Richtung beabstandet zueinander zwei Wiegezellenelemente 10 angeordnet sein.

Die Wiegezellenelemente 10 nehmen die auf sie in senkrechter Richtung einwirkenden Kräfte aufgrund des sich im Vorratsbehälter 3 befindlichen Materiales auf und ermitteln hieraus das Gewicht des sich im Vorratsbehälter 3 befindlichen zu verteilenden Gutes. Durch fortlaufende Messungen beim Ausbringen des Gewichtes sich im Vorratsbehälter 3 befindlichen Gutes durch die Wiegezellenelemente 10 lässt sich die Ausbringmenge in Verbindung mit einem der Verteilmaschine zugeordneten Rechner ermitteln. Hierzu übermitteln die Wiegezellenelemente 10 mittels geeigneter Mittel und in geeigneter Weise die von ihnen gemessenen Daten an den zugeordneten Rechner. Von dem Rechner lässt sich dann entsprechend der von den Wiegezellenelementen 10 übermittelten Daten die dem Zentrifugaldüngerstreuers zugeordnete Menge in geeigneter Weise mittels eines in dem Speicher des Rechners hinterlegten Auswerteprogramm errechnen und mit geeigneten Mitteln entsprechend steuern und/oder regeln.

## Patentansprüche

1. Gezogene Verteilmaschine, vorzugsweise als einachsiger Anhänger ausgebildet, mit einer Laufräder (6) aufweisenden Tragachse (5) und einer Zugdeichsel (7), einem mit der Tragachse (5) verbundenen Fahrwerksrahmen (4) und einem auf dem Fahrwerksrahmen (4) aufgesetzten langgestreckten Vorratsbehälter (3) zur Aufnahme von zu verteilendem Material und zugeordneter Verteileinrichtung (2) zur Verteilung des sich im Vorratsbehälter (3) befindlichen zu verteilenden Materiales, wobei dem Fahrwerksrahmen (4) zumindest drei Wiegezellenelemente (10) zur Ermittlung der Masse des sich im Vorratsbehälter (3) befindlichen zu verteilenden Materiales und/oder des aus dem Vorratsbehälter (3) entnommenen zu verteilenden Materiales zugeordnet sind, **dadurch gekennzeichnet, dass** dem Vorratsbehälter (3) ein den Vorratsbehälter (3) tragender und auf dem Fahrwerksrahmen (4) aufgesetzter Tragrahmen (8) zugeordnet ist, und dass die Wiegezellenelemente (10) zwischen dem Fahrwerksrahmen (4) und dem Tragrahmen (4) angeordnet sind.

2. Verteilmaschine nach Anspruch 1, **dadurch gekennzeichnet, dass** der Fahrwerksrahmen (4) und der Tragrahmen (8) beabstandet zueinander angeordnet und mittels der Wiegezellenelemente (10) miteinander verbunden sind.

3. Verteilmaschine nach zumindest einem der vorstehenden Ansprüche, **dadurch gekennzeichnet, dass** im hinteren Bereich des Fahrwerksrahmens (4) und des Tragrahmens (8) in seitlicher Richtung beabstandet zueinander zwei Wiegezellenelemente (10) und im vorderen Bereich des Fahrwerksrahmens (4) und des Tragrahmens (8) zumindest ein weiteres Wiegezellenelement (10) angeordnet ist.

4. Verteilmaschine nach zumindest einem der vorstehenden Ansprüche, **dadurch gekennzeichnet, dass** im vorderen Bereich des Fahrwerksrahmens (4) und des Tragrahmens (8) nur ein weiteres Wiegezellenelement (10) zumindest annähernd mittig und oberhalb oder in Verlängerung der Mittellängsachse der Zugdeichsel (7) angeordnet ist.

5. Verteilmaschine nach einem der Ansprüche 1 bis 3, **dadurch gekennzeichnet, dass** im vorderen Bereich des Fahrwerksrahmens (4) und des Tragrahmens (8) in seitlicher Richtung beabstandet zueinander zwei Wiegezellenelemente (10) angeordnet sind.
